# EUROPEAN PATENT APPLICATION

(11) **EP 3 453 941 A1**
(43) Date of publication of application: **13.03.2019**
(21) Application number: 18803518.2
(22) Date of filing: 06.07.2018
(51) Int. Cl.: F21S 2/00, B60Q 1/24, F21V 5/00, F21V 5/02, F21V 5/04, G03B 21/00, G09F 13/04, G09F 19/18, F21W 121/00, F21Y 115/10

(54) **ILLUMINATING DEVICE**

(30) Priority: 07.07.2017 JP 2017134007
(71) Applicant: Sato Light Industrial Co., Ltd., Tsu-shi, Mie 5142211 (JP)
(72) Inventor: DOI Motohiro, Tsu-shi Mie 514-2211 (JP); UCHIDA Kosuke, Tsu-shi Mie 514-2211 (JP)
(74) Representative: White, Duncan Rohan
(86) International application number: PCT/JP2018/025663
(87) International publication number: WO 2019/009405

(57) **Abstract**

Provided is an illumination device capable of displaying a predetermined design (for example, a logo mark) without using a design film. An illumination device 1 is intended for displaying a predetermined design, and includes: an LED 3; a condenser lens 4 that forms a secondary light source using light emitted from the LED 3; an emission surface 5b from which the secondary light source is emitted; and an optical lens 7 on which the emitted secondary light source is made incident and which has a focal point on the secondary light source. At least one three-dimensional shape of a convex part corresponding to the design and a concave part corresponding to the design is formed on the emission surface 5b.

## Description

### TECHNICAL FIELD

The present invention relates to an illumination device.

### BACKGROUND ART

Conventionally, there is known an illumination device that projects a projected image with a pattern using a design film applied with an arbitrary design (see Patent Document 1). For example, the illumination device disclosed in Patent Document 1 transmits the light emitted from a light source through a light shielding disk (design film) and a lens, and then has the light reflect on a mirror to project a design such as a logo mark. Such a design film is composed of a light shielding part and a non-light shielding part, and a difference in amount of light beams transmitted through the design film appears as a pattern. Such an illumination device is small, but is designed to have a high magnification so that the projected image can be largely projected.

### PRIOR ART DOCUMENTS

### PATENT DOCUMENT

Patent Document 1: JP 2006-500599 A

### SUMMARY OF THE INVENTION

### PROBLEMS TO BE SOLVED BY THE INVENTION

In conventional illumination devices, the design film is very small due to the design of the devices, and thus unless the design film is produced with high precision, jaggies appear in the projected image as they are, which affect the projection quality. Therefore, there is a problem that the cost of the design film becomes very expensive. Also, when incorporating the design film into the illumination devices, it is necessary to accurately position the design film each time, so that the design film is difficult to handle as a single component.

The present invention has been made to deal with such problems, and an object thereof is to provide an illumination device capable of displaying a predetermined design (for example, a logo mark) without using a design film.

### MEANS FOR SOLVING THE PROBLEM

An illumination device according to the present invention is intended for displaying a predetermined design, and includes: a light emitting element; an optical element forming a secondary light source using light emitted from the light emitting element; an emission surface from which the secondary light source is emitted; and an optical lens on which the emitted secondary light source is made incident and which has a focal point on the secondary light source. At least one three-dimensional shape of a convex part corresponding to the design and a concave part corresponding to the design is formed on the emission surface.

The optical element and the emission surface are integrated, and the three-dimensional shape is formed on the emission surface that is a surface of the optical element.

The three-dimensional shape has a plane that is parallel to the emission surface and is protruded or recessed in a direction orthogonal to the emission surface, and a plane that connects the parallel plane and the emission surface and is inclined, at a predetermined angle, with respect to the emission surface. The three-dimensional shape has a plane that is parallel to the emission surface and is protruded or recessed in a direction orthogonal to the emission surface, and a curved surface that connects the parallel plane and the emission surface.

The three-dimensional shape has a portion that falls within the depth of field of the optical lens and a portion that falls outside the range of the depth of field.

The illumination device does not have a projection surface and projects light onto a projection surface outside the device to display the design.

### EFFECT OF THE INVENTION

The illumination device of the present invention includes a light emitting element; an optical element forming a secondary light source using light emitted from the light emitting element; an emission surface from which the secondary light source is emitted; and an optical lens on which the emitted secondary light source is made incident and which has a focal point on the secondary light source, and a three-dimensional shape corresponding to the design is formed on the emission surface. Therefore, the secondary light source emitted from the emission surface is intentionally refracted or reflected by the three-dimensional shape corresponding to the design. As a result, the amount of light beams to be made incident on the optical lens decreases and the decreased portion appears as a shadow, so that a predetermined design is displayed. Thus, it is possible to display the predetermined design without using a design film processed with high precision, and to solve the defects caused by the design film.

Since the optical element and the emission surface are integrated and the three-dimensional shape is formed on the emission surface that is a surface of the optical element, it is not necessary to separately require a designed component, so that the number of components can be reduced. Furthermore, the light utilization efficiency can be increased by reducing the opportunity for light beams emitted from the secondary light source to come into contact with the interface.

The three-dimensional shape has a plane that is parallel to the emission surface and is protruded or recessed in a direction orthogonal to the emission surface, and a plane that connects the parallel plane and the emission surface and is inclined, at a predetermined angle, with respect to the emission surface. In this case, since the light emitted from the parallel plane is not refracted or reflected, the amount of light beams to be made incident on the optical lens is maintained. On the other hand, since the light emitted from the inclined plane is uniformly refracted or reflected, the amount of light beams to be made incident on the optical lens decreases. As a result, a portion corresponding to the inclined plane is represented as a shadow having a predetermined thickness in the projected image. Further, it is possible to adjust the shade of the shadow by taking into account the fact that the amount of refraction or reflection of light changes in accordance with the inclination angle of the inclined plane.

The three-dimensional shape has a plane that is parallel to the emission surface and is protruded or recessed in a direction orthogonal to the emission surface, and a curved surface that connects the parallel plane and the emission surface. In this case, since the light emitted from the parallel plane is not refracted or reflected, the amount of light beams to be made incident on the optical lens is maintained. On the other hand, since the light emitted from the curved surface is continuously refracted or reflected along the curved surface, the amount of light beams to be made incident on the optical lens gently decreases. As a result, a portion corresponding to the curved surface is represented as a shadow gradation in the projected image. This makes it possible to display the shadow gradation which is difficult to represent with the design film, by a simple method.

The three-dimensional shape has a portion that falls within the depth of field of the optical lens and a portion that falls outside the range of the depth of field. In this case, the shadow becomes clear in the portion falling within the depth of field, and the shadow becomes unclear in the portion falling outside the range of the depth of field. Hence, it is possible to adjust the shade of the shadow.

### BRIEF DESCRIPTION OF THE DRAWINGS

FIG. 1 is a schematic configuration diagram of an illumination device which is an example of the present invention.
FIG. 2 is an enlarged view of an emission surface of a condenser lens.
FIG. 3 is a view showing a projection view by the condenser lens of FIG. 2.
FIG. 4 is a diagram showing a change in amount of light beams due to refraction.
FIG. 5 is a diagram showing refraction when an inclination angle is changed.
FIG. 6 is a view showing the shade of the shadow when the inclination angle in FIG. 5 is changed.
FIG. 7 is a diagram showing refraction on a curved surface.
FIG. 8 is a view showing the shade of the shadow on the curved surface of FIG. 7.
FIG. 9 is a diagram showing the relationship between the depth of field and the height of a convex part.

### MODE FOR CARRYING OUT THE INVENTION

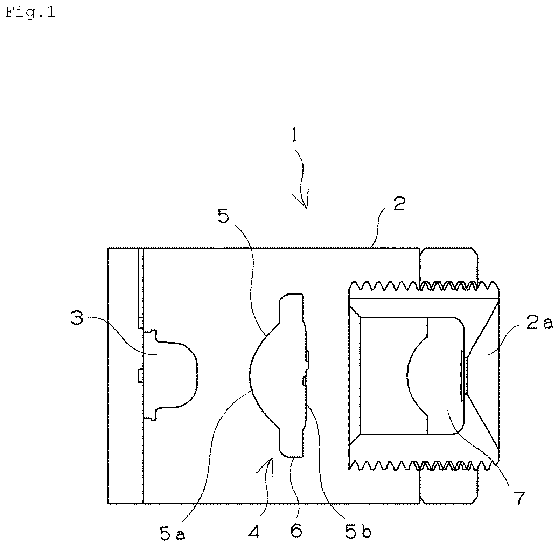

An example of the illumination device of the present invention will be described with reference to FIG. 1. In FIG. 1, an illumination device 1 is a substantially columnar illumination device. The illumination device 1 includes, in the space of a cylindrical housing 2, an LED 3 as a light emitting element, a condenser lens 4 arranged along the optical axis direction of the LED 3 (in the direction from the left to the right in this figure), and an optical lens 7. In the housing 2, an opening 2a is provided in the front surface part of the optical lens 7, and the light emitted from the opening 2a is projected on a projection surface. Here, the illumination device may have a spherical or rectangular external shape, but relatively preferably has a cylindrical external shape. In addition, the opening 2a is set at the best position according to the specification of the optical lens 7.

In FIG. 1, the LED 3 is provided on a substrate. As the LED 3, for example, monochromatic LEDs of blue, red, green, and the like, or an RGB type LED including a blue LED, a red LED, and a green LED can be used. As the LED 3, bullet type LEDs can be used in addition to surface mount type LEDs. Instead of the LEDs, LDs or light bulbs may be used.

The condenser lens 4 is an optical element for condensing the light emitted from the LED 3 to form a secondary light source, and is formed of a transparent material such as polycarbonate, acryl, or glass. The condenser lens 4 has a lens part 5 located at the center part in the optical axis direction and a flange part 6 extending in the circumferential direction of the lens part 5 on the side of the optical lens 7. In the lens part 5, the surface facing the LED 3 constitutes a convexly curved (hemispherical) incident surface 5a, and the surface facing the optical lens 7 constitutes an emission surface 5b which is a surface vertical to the optical axis direction. A three-dimensional shape, which will be described later, is formed on the emission surface 5b. As the optical element forming the secondary light source (condenser lens 4 in FIG. 1), any optical element can be employed so long as it forms a secondary light source using the light emitted from the light emitting element. The optical element may be, for example, an optical element that diffuses the light emitted from the light emitting element to form a secondary light source.

The optical lens (projection lens) 7 is a lens that projects a projection image on a projection surface (such as a screen) and has a focal point on the secondary light source. The optical lens 7 is formed of a transparent material such as polycarbonate, acryl, or glass. The optical lens 7 may be composed of a single lens or may be composed of a plurality of lenses.

The illumination device 1 has a substantially columnar shape with a diameter of 0.1 to 5 cm, for example, and can project a projected image at a magnification of, for example, 50 to 200 times according to the distance to the projection surface. The light emitted from the LED 3 is refracted by the incident surface 5a of the condenser lens 4 and condensed. The condensed light is emitted from the emission surface 5b toward the optical lens 7 as a secondary light source.

Note that the illumination device 1 can have an arbitrary shape according to the shape of the opening 2a or the like. In addition, the illumination device 1 may have a wavelength conversion element between the LED 3 and the condenser lens 4, according to need. The wavelength conversion element is made of, for example, a transmissive material such as silicon including a YAG light emitter, and wavelength-converts the light of a first spectral distribution emitted from the LED 3 into light of a second spectral distribution. For example, when a part of the blue light of the LED 3 is converted into yellow light by the wavelength conversion element, the light is emitted as white light.

Incidentally, the conventional illumination devices use a design film applied with an arbitrary design to project a projected image with a pattern. In this case, the design film is arranged between the condenser lens 4 and the optical lens 7. However, the design film is extremely expensive because it requires a high precision in design despite its extremely small size. In addition, since it is necessary to accurately position the design film each time when it is incorporated in an illumination device, the design film is difficult to handle as a single component.

Therefore, in this embodiment, a three-dimensional shape corresponding to the design is provided on the emission surface 5b of the condenser lens 4. As the three-dimensional shape, at least one of a convex part and a concave part is provided. Specifically, by intentionally refracting the secondary light source emitted from the emission surface 5b by the convex part or concave part, the amount of light beams to be made incident on the optical lens 7 is changed, so that a predetermined design is projected. As a result, it is possible to display the predetermined design without using a design film.

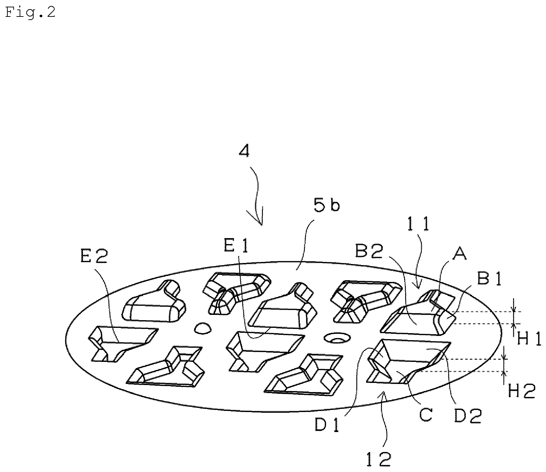

The three-dimensional shape will be described with reference to FIG. 2. FIG. 2 is an enlarged view of the emission surface 5b of the condenser lens 4. For example, a plurality of turner-shaped convex parts and concave parts are formed on/in the circular emission surface 5b having a diameter of 3 to 10 mm.

In FIG. 2, a convex part 11 among the plurality of convex parts will be described. The convex part 11 is formed so as to protrude outward from the emission surface 5b (toward the side of the optical lens 7) on the condenser lens 4, and has a top surface A which is a plane parallel to the emission surface 5b and an inclined surface B connecting the top surface A and the emission surface 5b. The inclined surface B is composed of a plane B1 inclined at a predetermined angle with respect to the emission surface 5b and a curved surface B2 smoothly connecting the emission surface 5b and the top surface A. The height H1 indicates the distance from the emission surface 5b to the highest point of the convex part 11, that is, the distance from the emission surface 5b to the top surface A, and is, for example, 5 µm to 500 µm. It should be noted that the height H1 may be the same or different among the plurality of convex parts.

Subsequently, a concave part 12 among a plurality of concave parts will be described. The concave part 12 is formed to be recessed inward from the emission surface 5b (toward the side of the LED 3) in the condenser lens 4, and has a bottom surface C which is a plane parallel to the emission surface 5b and an inclined surface D which connects the bottom surface C and the emission surface 5b. The inclined surface D is composed of at least one of a plane D1 inclined at a predetermined angle with respect to the emission surface 5b and a curved surface D2 smoothly connecting the emission surface 5b and the bottom surface C. The depth H2 indicates the distance from the emission surface 5b to the lowest point of the concave part 12, that is, the distance from the emission surface 5b to the bottom surface C, and is, for example, 5 µm to 500 µm. It should be noted that the depth H2 may be the same or different among the plurality of concave parts.

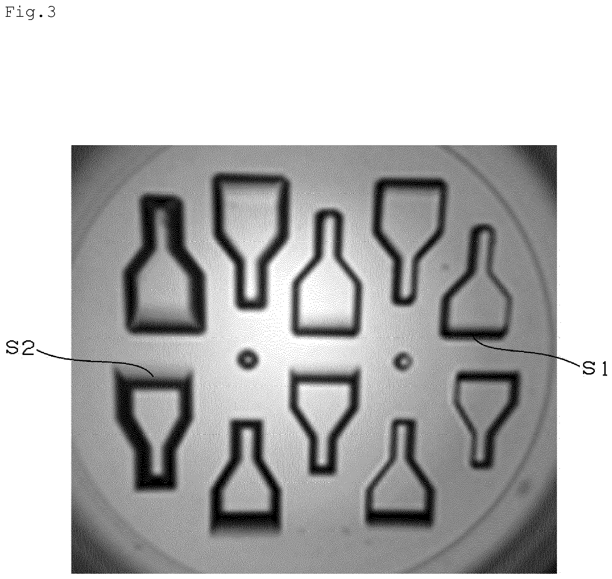

FIG. 3 is a photograph of projection on a projection surface 1 m ahead using the condenser lens 4 having the three-dimensional shape shown in FIG. 2. On the projection surface, the diameter of the circle corresponding to the circular emission surface 5b is 400 to 800 mm. As shown in FIG. 3, a plurality of projected images (turner-shaped patterns) corresponding to the plurality of turner-shaped convex parts and concave parts are projected. The contour of each of the projected images is represented as a shadow, and the thicknesses and shades (including gradation) of the respective shadows differ. This shadow corresponds to the inclined surface of the convex part and the inclined surface of the concave part. That is, by appropriately adjusting the inclined surface of the convex part and the inclined surface of the concave part, it is possible to reflect the thickness and shade of the shadow according to the predetermined design.

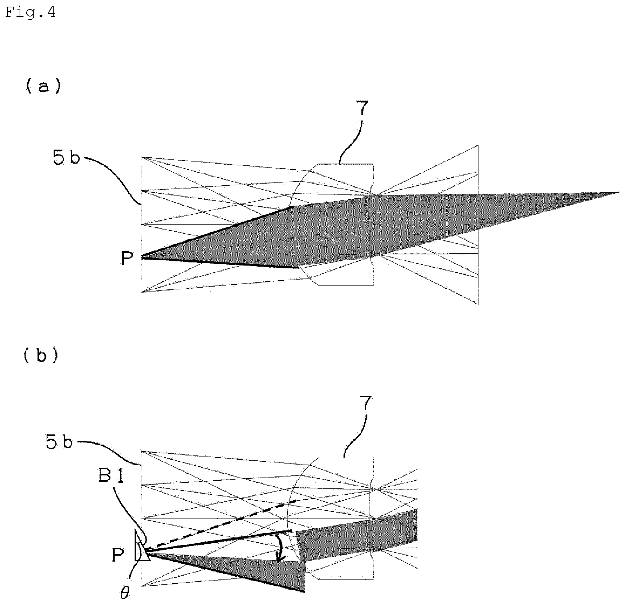

Here, the change in amount of light beams due to refraction will be described with reference to FIG. 4. FIG. 4(a) shows a case where neither a convex part nor a concave part is formed on the emission surface 5b, and FIG. 4(b) shows a case where a convex part is formed on the emission surface 5b. In FIG. 4(a), the light emitted from the point P on the emission surface 5b as a secondary light source is made incident on the optical lens 7 without refraction. On the other hand, in FIG. 4(b), the light emitted from the point P on the emission surface 5b as the secondary light source is refracted by the inclined plane B1. In this case, some of the light beams are out of the optical lens 7 due to the refraction, so that the amount of light beams to be made incident on the optical lens 7 decreases. As a result, a shadow appears on the projection surface. Here, assuming that the inclination angle formed between the emission surface 5b and the inclined plane B1 is θ, the preferable inclination angle θ is set, for example, to 10 to 80 degrees.

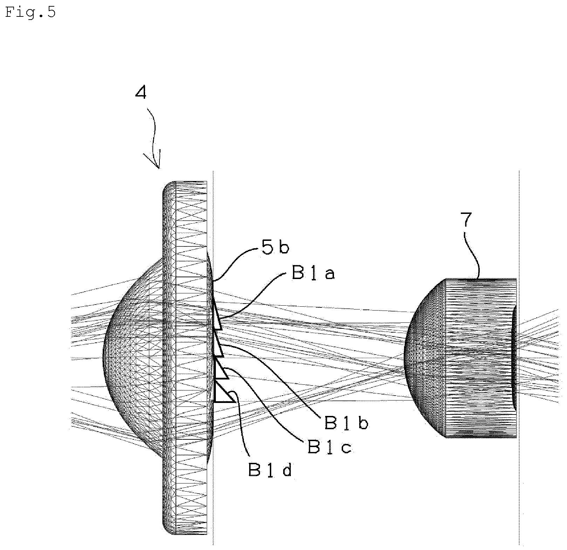

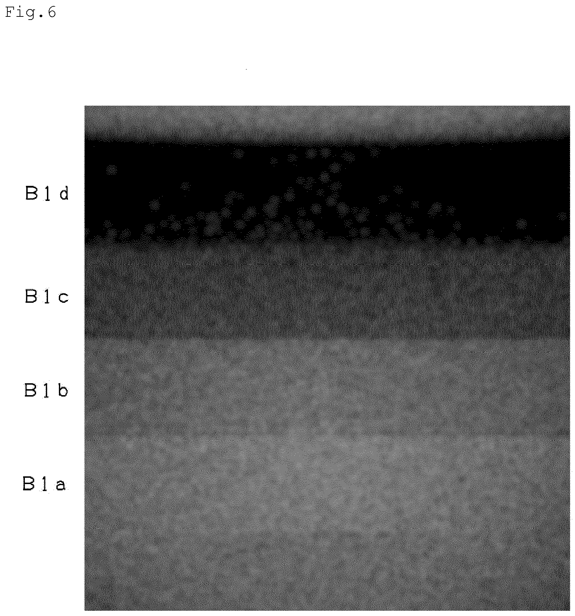

FIGS. 5 and 6 show changes in shade of the shadow according to the inclination angle θ. In FIG. 5, four planes B1a to B1d having different inclination angles are formed on the emission surface 5b, and the inclination angles of the respective planes B1a to B1d are θa to θd. The magnitudes of the inclination angles θa to θd are θa < θb < θc < θd. In this case, as the inclination angle θ increases, the amount of refraction of light increases more, and the amount of light beams to be made incident on the optical lens 7 decreases more. As a result, as shown in FIG. 6, the shade of the shadow on the projection surface increases more as the inclination angle θ increases. In other words, the brightness of the shadow decreases more as the inclination angle θ increases. In each of the planes B1a to B1d, the shade of the shadow is constant, and the shadow has a predetermined thickness corresponding to the width of each plane B1a to B1d. In this way, it is possible to adjust the shade and thickness of the shadow by the inclination angle θ and width of the inclined plane B1.

In FIGS. 4 to 6, the refraction of light on the plane B1 of the convex part is shown, but the same can be applied to the plane D1 of the concave part. Specifically, assuming that the inclination angle formed between the emission surface 5b and the inclined plane D1 is a, the preferable inclination angle α is set, for example, to 10 to 80 degrees. As the inclination angle α increases, the amount of light beams to be made incident on the optical lens 7 decreases more, and the shade of the shadow increases more. That is, it is possible to adjust the shade and thickness of the shadow by the inclination angle α and width of the plane D1.

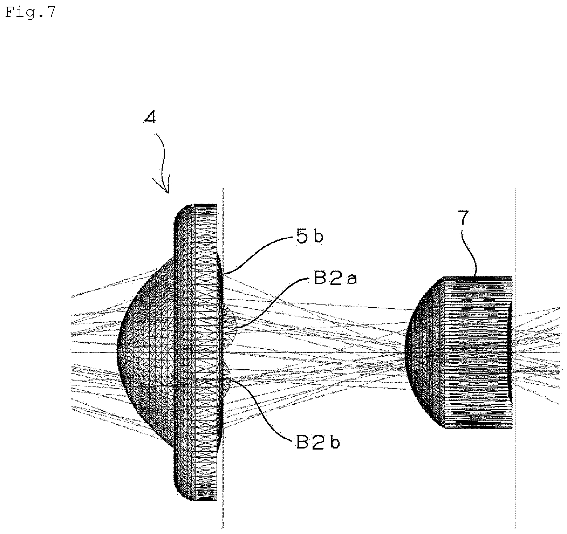

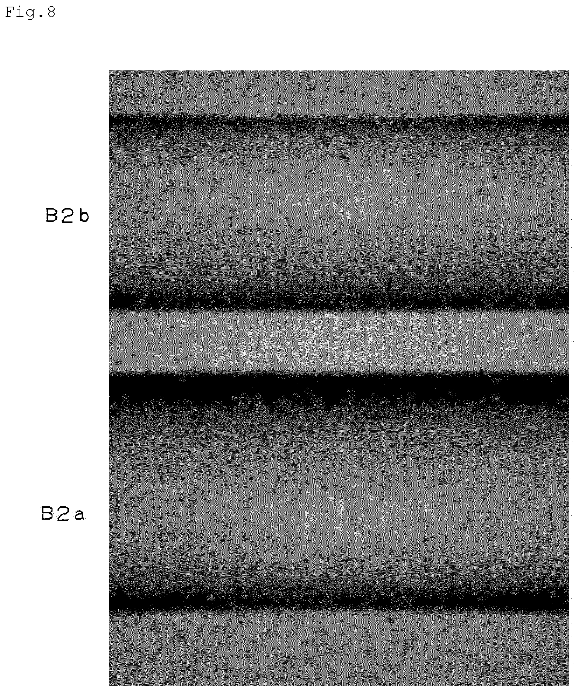

On the other hand, FIGS. 7 and 8 show changes in shade of the shadow when the inclined surface B of the convex part is the curved surface B2. In FIG. 7, two curved surfaces B2a and B2b are formed on the emission surface 5b. The light emitted from the emission surface 5b is refracted by the curved surfaces B2a and B2b. At this time, since the light is continuously refracted along the curved surfaces, the amount of light beams to be made incident on the optical lens 7 gently decreases. Specifically, at a position closer to the emission surface 5b, the inclination angle becomes larger and the amount of refraction of light increases more. As a result, the shade of the shadow continuously changes, and gradation is created in the shadow. Further, in FIG. 7, the curved surfaces B2a and B2b have the same curvature and different heights H1. In this case, the curved surface B2a having a larger height H1 has a steeper slope with respect to the emission surface 5b, and thus has a larger darkly-shaded portion than the curved surface B2b, as shown in FIG. 8. In addition, the gradation can be adjusted by changing the curvature of the curved surfaces.

In this manner, in the convex part, the shade of the shadow is constant on the inclined plane B1, whereas, on the curved surface B2, the shadow can be gradated by variably changing the amount of light beams. In FIGS. 7 and 8, the refraction of light on the curved surface B2 of the convex part is shown, but the same can be applied to the curved surface D2 of the concave part.

Incidentally, the height H1 of the convex part 11 and the depth H2 of the concave part 12 in FIG. 2 are set, for example, according to the distance between the condenser lens 4 and the optical lens 7. In this case, the height H1 and the depth H2 are preferably set according to the depth of field of the optical lens 7. The depth of field is a distance range in which occurrence of blurring of a projected image cannot be discriminated by the naked eye. That is, when the concavo-convex surface falls within the range of the depth of field, the projected image becomes clear, whereas when the concavo-convex surface falls outside the range of the depth of field, the projected image becomes unclear. The three-dimensional shape is designed so as to include a portion falling within the range of the depth of field of the optical lens 7 and a portion falling outside the range of the depth of field of the optical lens 7, in consideration of this phenomenon, so that the shade of the shadow can be changed.

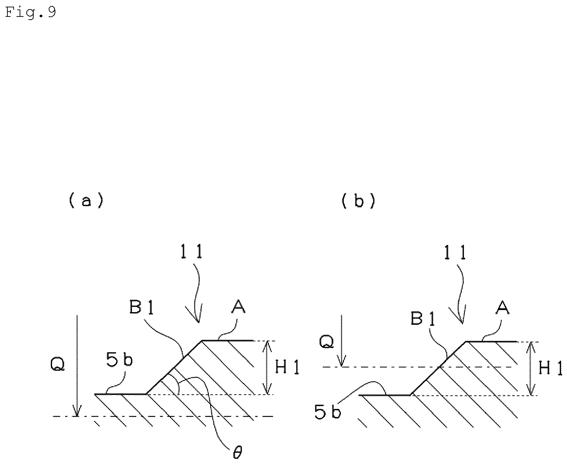

FIG. 9 shows the relationship between the depth of field and the height H1 of the convex part 11. FIG. 9(a) shows a case where the convex part 11 entirely falls within the depth of field. In this case, since the convex part 11 falls within the range Q of the depth of field, the shadow corresponding to the plane B1 is clearly projected. On the other hand, FIG. 9(b) shows a case where the convex part 11 has a portion falling within the range Q of the depth of field and a portion falling outside the range Q. In this case, the shadow corresponding to the plane B1 is clearly projected within the range Q of the depth of field, and is blurred outside the range Q of the depth of field. Thus, it is possible to introduce both a clear part in focus and a blur out of focus as design effects. It is also possible to make the convex part 11 entirely fall outside the range Q of the depth of field. In this way, by adjusting the height H1 of the convex part 11 with respect to the depth of field of the optical lens 7, it is possible to adjust the shade of the shadow. The depth H2 of the concave part 12 can also be set with respect to the depth of field of the optical lens 7.

The condenser lens 4 having the three-dimensional shape of the present invention can be obtained through indirect molding using a mold processed by precise cutting or electroforming, or direct molding such as precision cutting, potting, or etching. The mold used for the former molding (indirect molding) is designed by adjusting parameters (height H1, depth H2, inclination angle θ, inclination angle a, etc.) of the convex part and the concave part according to a predetermined design. The three-dimensional shape formed on the condenser lens 4 may be only a convex part or only a concave part. In addition, as shown in FIG. 2, convex parts and concave parts may be used in combination. Whether a convex part or a concave part is provided as the three-dimensional shape is set from the relationship between processing R of the ridge portion of the convex or concave part generated at the time of molding and the edge part, based on the molding method and the position of the edge part generated at the time of processing. The molding method includes an indirect molding method using a mold (for example, injection molding) and a direct molding method (for example, cutting of the condenser lens). As an example, an endmill, which is a general inexpensive method, is frequently used in the cutting applied to a mold or a lens, and is preferably applied to a case where the processing R added by the tip R of a blade is inevitably taken into consideration.

Here, the edge part is a portion of a three-dimensional shape corresponding to a shadow part (for example, S1 or S2 in FIG. 3) having the highest contrast in a shadow, and corresponds to E1 or E2 in FIG. 2. The position of the edge part is the position of the shadow part corresponding to the edge part in the shadow. For example, S1 in FIG. 3 is located outside the shadow, and S2 in FIG. 3 is located inside the shadow. In other words, S1 and S2 correspond to representing the shadow so that it becomes paler (contrast becomes lower) from the outside toward the inside and to representing the shadow so that it becomes paler (contrast becomes lower) from the inside toward the outside, respectively. Here, in FIG. 2, the three-dimensional shape on the emission surface 5b is formed by an indirect molding method using a mold. Furthermore, in order to make the shadow paler from the outside toward the inside in S1 of FIG. 3, the three-dimensional shape associated with the edge part E1 is a convex part. On the other hand, in order to make the shadow paler from the inside toward the outside in S2 of FIG. 3, the three-dimensional shape associated with the edge part E2 is a concave part. In this manner, the contrast direction of the shadow can be adjusted by forming the convex part or the concave part as the three-dimensional shape.

In the embodiment shown in FIG. 1, a three-dimensional shape is provided on the surface of the condenser lens 4 made of a transparent member, and a shadow is projected by intentionally refracting light using the three-dimensional shape. The present invention is not limited to this. For example, the surface of the condenser lens 4 may be a reflection surface and a three-dimensional shape may be provided on the surface. In this case, the light emitted from the reflection surface as the secondary light source is intentionally reflected by the three-dimensional shape, whereby the amount of light beams incident on the optical lens 7 decreases. As a result, a shadow can be projected on the projection surface. Further, the optical lens 7 may be constituted by a reflection surface. In the embodiment shown in FIG. 1, the three-dimensional shape is integrally formed on the surface of the condenser lens 4, that is, the face serving as the secondary light source, but the present invention is not limited thereto. For example, a component of a face serving as a secondary light source may be provided apart from the condenser lens 4, and a three-dimensional shape may be provided on the surface of this component.

The illumination device of the present invention is an illumination device which does not have a projection surface and projects light onto a projection surface outside the illumination device to display a predetermined design. Therefore, the illumination device is different from a so-called display device which has its own projection surface and displays the design via the projection surface. For example, the illumination device of the present invention can be used as a logo lamp projecting a logo mark on a projection surface. The illumination device of the present invention can be compactly designed, and can thus be incorporated in a side mirror of a vehicle when used as a logo lamp. In this case, it is possible to project the logo mark while illuminating the ground at feet.

As described above, the illumination device of the present invention does not display a design by two-dimensional light shielding/non-light shielding formed on a design film as a different component, but utilizes a refraction or reflection effect due to a three-dimensional shape (convex part or concave part) provided on an emission surface of a secondary light source to perform light shielding/non-light shielding, thereby making it possible to create a shadow necessary for design formation. As a result, a design film, which requires high precision printing, limits the manufacturing process, and is high in product unit price, becomes unnecessary. In addition, the three-dimensional shape is advantageous from the viewpoint of cost since it can be continuously formed by using one mold piece to perform nanofabrication or the like. In addition, the positioning of the design is fixed at the time of mold manufacture, and can thus be maintained constant at all times. Therefore, it is possible to eliminate disadvantages such as positioning each time.

### INDUSTRIAL APPLICABILITY

The illumination device of the present invention can display a predetermined design without using a design film, and can thus be widely used as an illumination device.

### REFERENCE SIGNS LIST

- 1: Illumination device
- 2: Housing
- 3: LED (light emitting element)
- 4: Condenser lens (optical element)
- 5: Lens part
- 6: Flange part
- 7: Optical lens
- 11: Convex part
- 12: Concave part

## Claims

1. An illumination device for displaying a predetermined design, comprising:
a light emitting element;
an optical element forming a secondary light source using light emitted from the light emitting element;
an emission surface from which the secondary light source is emitted; and
an optical lens on which the emitted secondary light source is made incident and which has a focal point on the secondary light source,
wherein at least one three-dimensional shape of a convex part corresponding to the design and a concave part corresponding to the design is formed on the emission surface.

2. The illumination device according to claim 1, wherein the optical element and the emission surface are integrated, and the three-dimensional shape is formed on the emission surface that is a surface of the optical element.

3. The illumination device according to claim 1, wherein the three-dimensional shape has a plane that is parallel to the emission surface and is protruded or recessed in a direction orthogonal to the emission surface, and a plane that connects the parallel plane and the emission surface and is inclined, at a predetermined angle, with respect to the emission surface.

4. The illumination device according to claim 1, wherein the three-dimensional shape has a plane that is parallel to the emission surface and is protruded or recessed in a direction orthogonal to the emission surface, and a curved surface that connects the parallel plane and the emission surface.

5. The illumination device according to claim 1, wherein the three-dimensional shape has a portion that falls within the depth of field of the optical lens and a portion that falls outside the range of the depth of field.

6. The illumination device according to claim 1, wherein the illumination device does not have a projection surface and projects light onto a projection surface outside the device to display the design.
